(19) **Europäisches Patentamt / European Patent Office / Office européen des brevets**

(11) **EP 3 884 633 B1**

(12) **EUROPEAN PATENT SPECIFICATION**

(45) Date of publication and mention of the grant of the patent:
**23.02.2022 Bulletin 2022/08**

(21) Application number: **21701664.1**

(22) Date of filing: **07.01.2021**

(51) International Patent Classification (IPC):
**H04L 27/26** $^{(2006.01)}$

(52) Cooperative Patent Classification (CPC):
**H04L 27/2657; H04L 27/2655; H04L 27/2672; H04L 27/2675**

(86) International application number:
**PCT/EP2021/050162**

(87) International publication number:
**WO 2021/140137 (15.07.2021 Gazette 2021/28)**

(54) **METHOD FOR A JOINT TIME-FREQUENCY SYNCHRONIZATION OF USER EQUIPMENT IN NB-IOT NETWORKS**

VERFAHREN ZUR GEMEINSAMEN ZEIT-FREQUENZ-SYNCHRONISATION VON BENUTZERGERÄTEN IN NB-IOT-NETZWERKEN

PROCÉDÉ DE SYNCHRONISATION CONJOINTE TEMPS-FRÉQUENCE D'ÉQUIPEMENT UTILISATEUR DANS DES RÉSEAUX NB-IDO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.01.2020 EP 20150965**
**23.06.2020 EP 20181705**

(43) Date of publication of application:
**29.09.2021 Bulletin 2021/39**

(73) Proprietor: **Shenzhen Goodix Technology Co., Ltd.**
**Shenzhen, Guangdong 518045 (CN)**

(72) Inventors:
- **SCHMIDT, Michael**
  **01324 Dresden (DE)**
- **BURY, Andreas**
  **01099 Dresden (DE)**
- **SEIFERT, Tobias**
  **01099 Dresden (DE)**

(74) Representative: **Lippert Stachow Patentanwälte Rechtsanwälte Partnerschaft mbB**
**Krenkelstraße 3**
**01309 Dresden (DE)**

(56) References cited:
**US-A1- 2017 264 406     US-A1- 2020 053 673**

- **MEDIATEK INC: "On design aspects for NB-IoT Wake Up Signal", 3GPP DRAFT; R1-1719591-ON DESIGN ASPECTS FOR NB-IOT WUS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, Nevado, USA; 20171127 - 20171201 18 November 2017 (2017-11-18), XP051369405, Retrieved from the Internet: URL:http://www.3gpp.org/ftp/tsg%5Fran/WG1%5FRL1/TSGR1%5F91/Docs/ [retrieved on 2017-11-18]**
- **MEDIATEK INC: "Performance Analysis of PSS in Initial Time-Frequency Uncertainty", 3GPP DRAFT; R1-1612128_PSS_ANALYSIS_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20161114 - 20161118 13 November 2016 (2016-11-13), XP051176083, Retrieved from the Internet: URL:http://www.3gpp.org/ftp/Meetings_3GPP_SYNC/RAN1/Docs/ [retrieved on 2016-11-13]**

**Description**

The invention relates to a method for a joint time-frequency synchronization of User Equipment in NB-IoT Networks already connected to a serving cell obtaining an optimal time-frequency offset estimation.

Narrowband Internet-of-Things (NB-IoT) is a LTE based communication standard of 3GPP (see: 3GPP. Physical channels and modulation. TS 36.211 V15.6.0, July 2019.), targeting cellular based IoT communication with low power consumption, low device costs and extended range of the radio link. Similar to the baseline LTE standard, specific synchronization sequences as well as reference symbols are part of the 3GPP specification for NB-IoT. For NB-IoT UEs, it is very important to sustain the time-frequency synchronization after sleep or longer transmission periods. A straightforward but slow implementation for NB-IoT is to perform a cell search from scratch as for instance shown in R1-161981 NB-PSS and NB-SSS Design.doc http://www.3gpp.org/ftp/TSG_RAN/WG1_RL1/TSGR1_AH/LTE_NB-IoT_1603/Docs/R1-161981.zip.

For NB-IoT different physical signals and channels in the downlink are provided by the standard, e. g. Narrowband Primary Synchronization Signal (NPSS), Narrowband Secondary Synchronization Signal (NSSS) and Narrowband Physical Broadcast Channel (NPBCH). These NB-IoT physical channels and signals are primarily multiplexed in time. Generally, a radio signal which is transmitted from a base station to a UE, is hierarchically structured into subframes of duration one millisecond, 10 subframes forming a frame, 1024 frames forming a hyper frame, and 1024 hyper frames being the ambiguity period after which such pattern repeats, i. e., every 2 hours and 55 minutes. Furthermore, each NB-IoT subframe spans over one physical resource block (PRB) (i.e. 12 subcarriers) in the frequency domain.

Synchronization sequences as well as reference symbols can be used for time and frequency offset estimation. The way how synchronization is accomplished depends on the state with regard to the attachment to the network. In case of initial cell search nothing is known about subframe timing and the frequency offset. During an initial cell search the user equipment (UE) must usually perform several synchronization tasks in a consecutive manner as described next.

For a first synchronization between a UE and a base station in frame and subframe and in order to determine the cell ID the UE uses the narrowband primary synchronization signal (NPSS) and the narrowband secondary synchronization signal (NSSS), where NPSS provides initial time-frequency synchronization and NSSS yields cell-ID and frame timing. In a next step the UE receives the narrowband physical broadcast channel (NPBCH) and the system information block 1 (SIB1), before initiating a first transmission from UE to base station via the narrowband physical random-access channel (NPRACH).

If, however, the UE is already attached to the network at a certain serving cell, subframe scheduling is known and the frequency offset has already been compensated. In this case, the UE needs to keep track of time and frequency offset due to drifts, in order to provide reliable detection of the physical downlink channels.

A particular problem related to NB-IoT downlink synchronization is the fact, that update of the time-frequency estimation can be challenging if very low power consumption is targeted. Because performing time-frequency re-synchronization based on an initial cell search may require a relative long active reception (RX) on time, which is in particular undesirable for battery powered devices.

During connected mode, the use of Narrowband Reference Symbols (NRS) may be sufficient in order to sustain reliable synchronization estimates while decoding data from the physical downlink channels NPDCCH (Narrowband Physical downlink control channel) and NPDSCH (Narrowband Physical downlink shared channel). If, however, the UE monitors paging during idle mode, long sleep periods are essential for reduced power consumption. For very long sleep periods (Extended Discontinuous Reception (eDRX), Power Save Mode (PSM)) the UE can in principle start synchronization always from scratch with an initial cell search after wakeup. For shorter sleep periods, however, NRS based re-synchronization after wakeup may not work, since the catch range of the time and frequency deviation is too small. On the other hand, synchronization from scratch based on initial cell search may take too long as mentioned above. So in some use-cases, a more optimized re-synchronization method between the two extremes is beneficial.

Another use-case for re-synchronization is related to some NB-IoT specific aspects of uplink transmission. User equipment (UEs) of NB-IoT are required to support half-duplex operation only, hence there is no obvious way to track the synchronization parameters during a long transmission. In order to provide a means for synchronization during transmission, 3GPP introduces uplink (UL) transmission gaps of 40 ms after a transmission period of 256 ms. During this relative short duration of the uplink (UL) transmission gap an efficient method for synchronization is required, especially since this must be accomplished at relative low SNR less than -10dB.

The synchronization sequences NPSS (Narrowband Primary Synchronization Signal) and NSSS Narrowband Secondary Synchronization Signal) are transmitted in certain subframes. In contrast to the relative sparse occurrence of NRS distributed over several subframes, both NPSS and NSSS occupy many resource elements within the subframe interval.

For instance, the NPSS contains 121 resource elements at subframe #5 while a subframe containing NRS may contain up to 16 resource elements only. Hence, NPSS and NSSS are more useful if re-synchronization needs to be performed apart from normal receive operation at connected mode.

In theory, NPSS is transmitted in subframe #5 in every 10 ms frame, using the last 11 OFDM symbols in the subframe. NPSS detection is one of the most computationally demanding operations from a UE perspective. To allow efficient implementation of NPSS detection, NB-IoT uses hierarchical sequence. For each of the 11 NPSS OFDM symbols in a subframe, either **p** or -**p** is transmitted, where **p** is the base sequence generated based on a length-11 Zadoff-Chu (ZC) sequence with root index 5. Each of the length-11 ZC sequence is mapped to the lowest 11 subcarriers within the NB-IoT PRB.

NSSS has 20 ms periodicity and is transmitted in subframe #9, also using the last 11 OFDM symbols that consist of 132 resource elements overall. NSSS is a length-132 frequency-domain sequence, with each element mapped to a resource element. NSSS is generated by element-wise multiplication between a ZC sequence and a binary scrambling sequence. The root of the ZC sequence and binary scrambling sequence are determined by narrowband physical cell identity (NB-PCID). The cyclic shift of the ZC sequence is further determined by the frame number.

NPBCH carries the master information block (MIB) and is transmitted in subframe #0 in every frame. A MIB remains unchanged over the 640 ms transmission time interval (TTI).

With release 15 of the NB-IoT standard (see: 3GPP. Physical channels and modulation. TS 36.211 V15.6.0, July 2019.), further power reduction during paging monitoring at idle mode can be obtained by means of a specific Narrowband Wakup Signal (NWUS). This signal is associated to certain paging occasions. In case the NWUS is present, time-frequency offset estimation can be directly obtained from the signal sequences of NWUS.

Time-frequency offset estimation using NPSS and NSSS is usually based on a boot strap approach, see e. g. (Qualcomm Incorporated. NB-PSS and NB-SSS Design. R1-161981, March 2016). First, the presence of a NPSS is detected along with a coarse estimate of the time and the frequency offset. Additional detection of the NSSS provides information of the cell identity and the frame structure. It can be also used for fine frequency offset estimation. Such a boot-strap approach is sub-optimal if the cell ID is already known along with its subframe The document MEDIATEK INC: "On design aspects for NB-IoT Wake Up Signal", vol. RAN WG1, no. Reno, Nevado, USA; 2017-11-18 discloses that idle devices waking up from long eDRX cycle experience very large time and frequency drift and synchronization can be assumed to be lost, so it is not desirable to proceed to NB-IoT wakeup signal (WUS) detection without pre-synchronizaton using legacy NPSS and NSSS. For this the Cell ID is assumed to be known.

It is therefore an objective of the present invention to provide a procedure that permits optimized time-frequency synchronization of a UE, whereby quantities already known to the UE are used to operate the UE power efficiently and with a better performance.

The objective of the invention will be solved by a method for a joint time-frequency synchronization of User Equipment (UE) in NB-IoT Networks already connected to a serving cell obtaining an optimal time-frequency offset estimation, the method comprising the following stages:

- demodulating a received NB-IoT subframe $R_m$ containing resource elements in the frequency domain with regard to a pre-computed reference NB-IoT subframe $B_m$ containing expected resource elements in the frequency domain, whereas the pre-computed resource elements of $B_m$ are derived from information of the serving cell, and storing resource elements of the demodulated NB-IoT subframe $W_m$ in matrix $W$, with m being a natural number equal or greater than 0 and presenting the m-th processed subframe (stage 1) ;

- computing a metric $V_m(f,t)$ defined by $V_m(f,t) = \left| \sum_{k=0}^{N_c-1} \sum_{l=0}^{N_s-1} w_{k,l} \cdot p_l(-f) \cdot q_k(-t) \right|^2$ with $w_{k,l}$ being the elements of matrix $W$ of the m-th processed subframe $W_m$ and functions $q_k(t) = \exp(2\pi j t (k - \frac{N_c-1}{2}) \Delta f_s)$ and $p_l(f) = \exp(2\pi j \tau_l f)$ with regard to a region of pre-defined discrete frequency offset values $f \in F$ and discrete time offset values $t \in T$ (stage 2);

- recursively combining the metric $V_m(f,t)$ in a non-coherent way over multiple demodulated NB-IoT subframes $W_m$ resulting in a new metric $U_m(f,t)$ (stage 3);

- recursively computing a reference value $S_m$ over multiple demodulated NB-IoT subframes $W_m$, based on a subframe energy of the presently processed demodulated NB-IoT subframe $W_m$ (stage 4);

- comparing the non-coherently combined new metric $U_m(f,t)$ with the reference value $S_m$ (stage 5), whereas

- if a metric value of $U_m(f,t)$ does not exceed a threshold $K_{Threshold}(m)$, stages 1 to 5 of the method are recursively repeated up to a pre-defined maximum number of subframes $M_{max}$ have been demodulated with $M_{max}$ being a natural number greater than 0, otherwise

- if a metric value of $U_m(f,t)$ exceeds the threshold $K_{Threshold}(m)$, arg-max values with regard to the discrete frequency offset values $f \in F$ and the discrete time offset values $t \in T$ are computed based on the non-coherently combined metric values of $U_m(f,t)$ obtaining an optimal value of the time-frequency offset estimate, provided the number of combined subframes $W_m$ has not exceeded $M_{max}$ (stage 6) .

The key idea of the inventive method is to demodulate a received NB-IoT subframe with regard to all the resource elements of the expected (ideal) subframe. Let the ideal subframe be defined by the matrix $B = (b_{k,l})$ $k = 0,1,...,N_c - 1$, $l = 0,1,...,N_s-1$ denoting the $(k,l)$ expected resource elements over the $N_c = 12$ carriers and $N_s = 14$ OFDM symbols per subframe.

If R is the matrix corresponding to the resource elements of the received subframe (in the frequency domain), then let the matrix W be defined as

$$W = \left(w_{k,l} = r_{k,l} \cdot b_{k,l}^*\right), \quad k = 0,1,\dots,N_c - 1, \quad l = 0,1,\dots,N_s - 1, \quad (1)$$

which denotes the demodulated subframe. In the absence of any receiver impairments due to noise and frequency selectivity and assuming perfect synchronization with regard to time and frequency offset

$$w_{k,l} = w_0 \exp(j\alpha), \quad k = 0,1,\dots,N_c - 1, \quad l = 0,1,\dots,N_s - 1,$$

for some real scalar $w_0$ and some angle $\alpha$. Hence, all complex valued elements of $W$ point to the same direction.

In case of a frequency offset $f_0$ in units of Hz,

$$w_{k,l}(f_0) = w_0 \exp(j\alpha) \cdot p_l(f_0), \quad k = 0,1,\dots,N_c - 1, \quad l = 0,1,\dots,N_s - 1$$

with

$$p_l(f_0) = \exp(2\pi j \tau_l f_0) \qquad (2)$$

being the frequency-shift rotation as a function of $f_o$, where $\tau_l$ is the time offset of the start of the $l$-th OFDM symbol within a subframe. The start $\tau_l$ of the $l$-th OFDM symbol is defined as the time right after its corresponding cyclic prefix.

In case of a time offset $t_o$, the equation (2) changes to

$$w_{k,l}(t_0) = w_0 \exp(j\alpha) \cdot q_k(t_0), \quad k = 0,1,\dots,N_c - 1, \quad l = 0,1,\dots,N_s - 1$$

With

$$q_k(t_0) = \exp\left(2\pi j t_0 \left(k - \tfrac{N_c-1}{2}\right)\Delta f_s\right) \qquad (3)$$

being the time-shift rotation as a function of $t_o$,
where $\Delta f_s = 15$kHz is the frequency spacing of the OFDM carriers. If both, a frequency offset and a timing offset applies,

$$w_{k,l}(f_0,t_0) = w_0 \exp(j\alpha) \cdot p_l(f_0) \cdot q_k(t_0) \qquad (4)$$

Now, let $W = (w_{k,l})$ be the demodulated subframe according to equation (1) with unknown time and frequency offset. Let V define the metric

$$V(f,t) = \left|\sum_{k=0}^{N_c-1} \sum_{l=0}^{N_s-1} w_{k,l} \cdot p_l(-f) \cdot q_k(-t)\right|^2 \qquad (5),$$

and $V_m(f,t)$ denotes the metric of the m-th processed subframe.

Hence, if $R = B + N$ with $N$ being a noise matrix where all elements are zero mean white Gaussian noise of equal variance, then $(\hat{f},\hat{t}) = \arg\text{-}max_{f\in F, t\in T} V(f,t)$ are the optimal estimates of frequency and time with regard to a certain frequency offset region $F$ and a time offset region $T$. From a practical point of view, the sets $T$ and $F$ can be discrete with some useful resolution.

For instance, the set $F$ can be defined as

$$F = \{-N_F \Delta F, (-N_F + 1)\Delta F, \dots, -\Delta F, 0, \Delta F, \dots, (N_F - 1)\Delta F, N_F \Delta F\}.$$

Hence, $F$ is the set of $2N_F + 1$ frequency steps with a frequency resolution of $\Delta F$.

Similarly, $T = \{-N_{FT}\Delta T, (-N_T + 1)\Delta T, \dots, -\Delta T, 0, \Delta T, \dots, (N_T - 1)\Delta T, N_T\Delta T\}$ is the set of $2N_T + 1$ time offsets steps with a time offset resolution of $\Delta T$.

In a next stage (stage 3) a new metric

$$U_m(f,t) = U_{m-1}(f,t) + V_m(f,t), \quad m = 0,1,\dots,M-1 \tag{6}$$

is calculated by combining the metric $V_m(f,t)$ in a non-coherent way over multiple demodulated NB-IoT subframes $W_m$, where $V_m(f,t)$ is the metric according to equation (5) of the m-th subframe and $U_{-1}(f,t)=0$. Hence, the optimal values can be obtained by $(\hat{f},\hat{t})= \arg - \max_{f \in F, t \in T} U_{M-1}(f,t)$. The advantage of this third stage is that for a very low signal to noise ratio, observation of a single subframe may still lead to large estimation errors, which can be reduced by combining multiple subframes. The approach of this invention is to non-coherently combine the metric V as described above.

Instead of applying a summation over a pre-defined number of subframes $M \geq 1$, it is desirable to terminate the summation automatically, once a reliable estimate is available. In order to do this, one computes a reference value (stage 4)

$$S_m = S_{m-1} + E_m, \quad m = 0,1,\dots,M-1 \tag{7}$$

with $S_{-1} = 0$, where $E_m$ is defined as $E_m = \sum_{k=0}^{N_c-1} \sum_{l=0}^{N_s-1} |w_{k,l}|^2$.

In stage 5 the non-coherently combined new metric $U_m(f,t)$ is compared with the reference value $S_m$.

The summation can be stopped at subframe $0 \leq m_0 \leq M-1$ if

$$\frac{U_m(\hat{f},\hat{t})}{S_{m_0}} > K_{Threshold} \ (m = m_0) \tag{8}$$

where $K_{Threshold}(m)$ is a threshold and $(\hat{f},\hat{t})= \arg\text{-}\max_{f \in F, t \in T} U_{m_0}(f,t)$ (stage 6), otherwise stages 1 to 5 of the method are recursively repeated up to a pre-defined maximum number of subframes $M_{max}$ have been demodulated with $M$ being a natural number greater than 0. The threshold $K_{Threshold}$ controls the targeted estimation error, the larger the threshold, the smaller the resulting estimation error.

In case condition (8) is never true for some pre-defined value $M = M_{max}$, no reliable estimate can be found. Note that threshold $K_{Threshold}$ should (in general) be a function of m, since the threshold can relax with increasing number of m.

In a variant of the invention all complex exponentials with regard to the discrete frequency offset values $f \in F$ for all $N_s = 14$ OFDM symbols are pre-computed and stored in a look-up table.

And in a further variant of the inventive method, all complex exponentials with regard to the discrete time offset values $t \in T$ for all $N_c = 12$ OFDM symbols are pre-computed and stored in a look-up table.

It is a straightforward approach for the metric computation of equation (5) to transform elements $w_{k,l}$ to elements $\tilde{W}_{k,l} = W_{k,l(-f,-t)}$ according to equation (4) for each $f \in F$ and $t \in T$. Assuming values $p_1(-f)$ according to equation (2) are pre-computed for all $l \in 0,1,\dots N_s - 1$ and all $f \in F$ and stored in a look-up table of size $N_s \times (2N_F + 1)$. Similarly, all values $q_k(-t)$ with regard to equation (3) are pre-computed for all carriers $k \in 0,1,\dots N_c - 1$ and all $t \in T$ and stored in a look-up table of size $N_{sc} \times (2N_T + 1)$.

The overall computational complexity would be of the order

$$O(N_c \cdot N_s \cdot (2N_F + 1) \cdot (2N_T + 1)).$$

In another variant of the inventive method and to reduce the computational complexity, the computation of the metric $V_m(f,t)$ is done in a two-stage approach, at which in a first stage intermediate values $c_k(f)$ are first computed based on the discrete frequency offset values $f \in F$ and in a second stage the metric values $V_m(f,t)$ are computed based on the intermediate values $c_k(f)$ of the first stage and based on the discrete values $t \in T$ and $f \in F$.

The intermediate values are computed by

$$c_k(f) = \sum_{l=0}^{N_s-1} w_{k,l} \cdot p_l(-f) \qquad k = 0,1, \dots, N_c - 1, \qquad f \epsilon F \, .$$

Based on the values $c_k(f)$, one can compute

$$V(f,t) = \left| \sum_{k=0}^{N_c-1} c_k(f) \cdot q_k(-t) \right|^2, \ f \epsilon F, \ t \epsilon T \, .$$

The overall computational complexity is then of the order

$$O_1\big(N_c \cdot N_s \cdot (2N_F + 1)\big) + O_2\big(N_c \cdot (2N_F + 1) \cdot (2N_T + 1)\big) \, .$$

The inventive method comprises for the demodulation of a particular NB-IoT subframe a pre-computation of a reference NB-IoT subframe $B_m$ containing expected resource elements in the frequency domain, whereas the pre-computed resource elements of $B_m$ are derived from information of the serving cell, with m being a natural number equal or greater than 0 and presenting the m-th processed subframe. For the pre-computation the complex conjugate of the expected (ideal) resource elements, stored in matrix **B\*** are necessary. This is more or less complex depending on the particular subframe, as outlined below.

So, in a variant of the inventive method, the Narrowband-Primary-Synchronization-Signal (NPSS) transmitted on subframe #5 of an anchor carrier is demodulated in stage 1, whereas the pre-computed reference NB-IoT subframe $B_m$ is constant regardless of the LTE frame number.

Demodulation of the NPSS is straightforward, since the matrix **B** is constant regardless of the LTE frame number, which can be comprehended in http://www.3gpp.org/ftp/TSG_RAN/WG1_RL1/TSGR1_AH/LTE_NB-IoT_1603/Docs/R1-161981.zip, section 10.2.7.1., which is not repeated here for clarity issues. All elements of $B^* = (b^*_{k,l})$ can be pre-computed and stored in a look-up table. Demodulation is performed at subframe #5 of an anchor carrier.

In another variant of the inventive method, the Narrowband-Secondary-Synchronization-Signal (NSSS) transmitted on subframe #9 of an anchor carrier for every even LTE frame number is demodulated in stage 1, whereas the pre-computation of the reference NB-IoT subframe $B_m$ depends on the cell-ID.

For NSSS demodulation, matrix **B\*** can be initially pre-computed according to http://www.3gpp.org/ftp/TSG_RAN/WG1_RL1/TSGR1_AH/LTE_NB-IoT_1603/Docs/R1-161981.zip, section 10.2.7.2 (not repeated here for clarity issues), depending on the cell-ID. Demodulation is performed at subframe #9 of an anchor carrier for every even valued LTE frame number. From a practical point of view, the roots of unity $G_k = \exp\left(\frac{2\pi jk}{131}\right)$, $k = 0,1,\dots,130$ can be pre-computed and stored in a look-up table, in order to obtain the values of the Zadoff-Chu sequence, see http://www.3gpp.org/ftp/TSG_RAN/WG1_RL1/TSGR1_AH/LTE_NB-IoT_1603/Docs/R1-161981.zip. The elements of the conjugate of the Zadoff-Chu sequence $z(k) = \exp\left(j\pi \frac{uk(k+1)}{131}\right)$, $k = \mathbf{0,1,\dots,130}, u \in \mathbb{Z}$ can be simply read out by $z(k) = G_{y(k)}$ with index sequence $y(n) = (y(n-1) + u \cdot n) \bmod 131, y(0) = 0, n = 1,2,\dots,130.$

In addition, $\pi/2$-rotation of resource elements (depending on the LTE frame number) is required. Hence the pre-computation of **B\*** is relative simple.

Besides subframes that are carrying synchronization signals, those subframes carrying broadcast data like master information Block (MIB) can be exploited for synchronization as well.

Hence, in another further variant of the inventive method, the master information Block (MIB) payload information which is delivered in the Narrowband-Physical-Broadcast-Channel (NPBCH) is used to demodulate NPBCH in stage 1, whereas the pre-computation of the reference NB-IoT subframe $B_m$ is performed at the beginning of the synchronization procedure and depends on the re-encoding of the resource elements of the NPBCH.

In NB-IoT, MIB is delivered in NPBCH, which uses the first subframe of each system frame. MIB payload is usually static and known to the UE from the very first cell search, which is why it can be used as known reference data to demodulate NPBCH. For this purpose, MIB payload needs to be re-modulated, following the steps described in http://www.3gpp.org/ftp/TSG_RAN/WG1_RL1/TSGR1_AH/LTE_NB-IoT_1603/Docs/R1-161981.zip, section 10.2.4 (not repeated here for clarity issues). This comprises bitstream encoding, rate matching, scrambling, and QPSK modulation. The conjugated QPSK symbols are mapped to the resource elements of the NPBCH subframe, representing the matrix **B\***. MIB is spread over eight subframes, leading to eight different matrices, where the right one is selected according to the current frame timing. The pre-computation of the **B\*** has to be performed at the beginning of the synchronization procedure. Since the upper 4 bits of the frame timing are part of the MIB payload, a re-computation of $B^*$ at frame boundaries SFN % 64 = 0 is required.

NB-IoT supports space-frequency block coding, i. e. the broadcast channel (as well as physical downlink channels) might be transmitted by two concurrent signals that superimpose on the receiver side. The symbol mapping to both transmit antennas follows the Alamouti scheme, whose orthogonality property allows demodulation at low complexity. Regarding synchronization in a two-transmit antenna system, NPBCH can hence be demodulated both with respect to the first transmit antenna and with respect to the second transmit antenna, resulting in two demodulation results.

In a further variant of the inventive method, the Narrowband-Wakeup-Signal (NWUS) is demodulated in stage 1, whereas the pre-computation of the reference NB-IoT subframe $B_m$ depends on the cell-ID and the time of the paging occasion to which NWUS is associated.

For NWUS demodulation, matrix $B^*$ can be pre-computed according to http://www.3gpp.org/ftp/TSG_RAN/WG1_RL1/TSGR1_AH/LTE_NB-IoT_1603/Docs/R1-161981.zip, section 10.2.6B (not repeated here for clarity issues), depending on the cell-ID and the time of the paging occasion to which NWUS is associated. The Zadoff-Chu sequence is equivalent to the one of the NSSS. In addition, $\pi/2$-rotation of resource elements (depending on a scrambler state) is required. For a subframe in which SystemInformationBlockType1-NB (SIB-1) is transmitted or a subframe in which an System Information (SI) message is transmitted, the integration according to equations (6) and (7) should be ommited, since no NWUS signal is transmitted at those subframes. The reliability check of equation (8) can be used for detection of the presence or absence of the NWUS.

The invention will be explained in more detail using an exemplary embodiment.

The appended drawing shows

Fig.     Example of the computed metrics $V_m(f,t)$ summarized in a function $V(f,t)$ for $f_0$ = -400Hz and $t_0$ = 2.5$\mu$s.

The figure shows an example of the two-dimensional function V, with frequency offset $f_0$ = -400Hz and time offset $t_0$ = 2500ns. In this case, the resolution for frequency offset was set to $\Delta F$ = 80Hz with $N_F$ = 15. So the catch range with regard to frequency deviation is approx. $\pm$1.2kHz. The time resolution was set to $\Delta T$ = 790ns with $N_T$ = 10 supporting a catch range of approx. $\pm$7.9$\mu$s. For demodulation, the NSSS was used without additive noise. The optimal estimation values with regard to the maximum of $V(f,t)$ are $\hat{f}$ = -400Hz and $\hat{t}$ = 2370ns.

Summarizing, an optimal joint time-frequency offset estimate in case the serving cell is already known and other information can be derived from the knowledge of the serving cell is disclosed. In particular, the time-frequency estimation is based on the demodulation of a complete received NB-IoT subframe with respect to all the resource elements of the expected (ideal) content of the subframe. This re-synchronization can be based on the sequences NPSS and NSSS but also on the NPBCH. For paging with NWUS signaling, detection and re-synchronization can be based on the NWUS.

The inventive procedure provides optimized time-frequency synchronization of a UE, whereby the UE can operate more power efficiently and with a better performance. The inventive method is running on the NB-IoT modem of the UE side.

## Claims

1. A method for a joint time-frequency synchronization of User Equipment, UE, in NB-IoT Networks already connected to a serving cell obtaining an optimal time-frequency offset estimation, the method comprising the following stages:

   - (stage 1) demodulating a received NB-IoT subframe $R_m$ containing resource elements in the frequency domain with regard to a pre-computed reference NB-IoT subframe $B_m$ containing expected resource elements in the frequency domain, whereas the pre-computed resource elements of $B_m$ are derived from information of the serving cell, and storing resource elements of the demodulated NB-IoT subframe $W_m$ in matrix $W$, with m being a natural number equal or greater than 0 and presenting the m-th processed subframe,

   - (stage 2) computing a metric $V_m(f,t)$ defined by $V_m(f,t) = \left| \sum_{k=0}^{N_c-1} \sum_{l=0}^{N_s-1} w_{k,l} \cdot p_l(-f) \cdot q_k(-t) \right|^2$ with $w_{k,l}$ being the elements of matrix $W$ of the m-th processed subframe $W_m$ and functions

   $$q_k(t) = \exp\left( 2\pi j t \left( k - \tfrac{N_c-1}{2} \right) \Delta f_s \right)$$ and $p_l(f) = \exp(2\pi j \tau_l f)$ with regard to a region of pre-defined discrete frequency offset values $f \in F$ and discrete time offset values $t \in T$, Nc is the number of subcarriers in a subframe, Ns is the number of symbols in a subframe and $\Delta f_s$ is the subcarrier spacing

   - (stage 3) recursively combining the metric $V_m(f,t)$ in a non-coherent way over multiple demodulated NB-IoT

subframes $W_m$ resulting in a new metric $U_m(f,t)$,

- (stage 4) recursively computing a reference value $S_m$ over multiple demodulated NB-IoT subframes $W_m$, based on a subframe energy of the presently processed demodulated NB-IoT subframe $W_m$,

- (stage 5) comparing the non-coherently combined new metric $U_m(f,t)$ with the reference value $S_m$, whereas

- if a normalized metric value of $U_m(f,t)/S_m$ does not exceed a threshold $K_{Threshold}(m)$, stages 1 to 5 of the method are recursively repeated up to a pre-defined maximum number of subframes $M_{max}$ have been demodulated with $M_{max}$ being a natural number greater than 0, otherwise

- (stage 6) if the normalized metric value of $U_m(f,t)/S_m$ exceeds the threshold $K_{Threshold}(m)$, arg-max values with regard to the discrete frequency offset values $f \in F$ and the discrete time offset values $t \in T$ are computed based on the non-coherently combined metric values of $U_m(f,t)$ obtaining an optimal value of the time-frequency offset estimate, provided the number of combined subframes $W_m$ has not exceeded $M_{max}$.

**2.** The method for a joint time-frequency synchronization of UE according to claim 1, wherein all complex exponentials with regard to the discrete frequency offset values $f \in F$ for all $N_s$ = 14 OFDM symbols are pre-computed and stored in a look-up table.

**3.** The method for a joint time-frequency synchronization of UE according to claim 1, wherein all complex exponentials with regard to the discrete time offset values $t \in T$ for all $N_c$ = 12 OFDM symbols are pre-computed and stored in a look-up table.

**4.** The method for a joint time-frequency synchronization of UE according to claim 1, wherein the computation of the metric $V_m(f,t)$ is done in a two-stage approach, at which in a first stage intermediate values $c_k(f)$ are first computed based on the discrete frequency offset values $f \in F$ and in a second stage the metric values $V_m(f,t)$ are computed based on the intermediate values $c_k(f)$ of the first stage and based on the discrete values $t \in T$ and $f \in F$.

**5.** The method for a joint time-frequency synchronization of UE according to claim 1, wherein the Narrowband-Primary-synchronization-Signal transmitted on subframe #5 of an anchor carrier is demodulated in stage 1, whereas the pre-computed reference NB-IoT subframe $B_m$ is constant regardless of the LTE frame number.

**6.** The method for a joint time-frequency synchronization of UE according to claim 1, wherein the Narrowband-Secondary-Synchronization-Signal transmitted on subframe 9 of an anchor carrier for every even LTE frame number is demodulated in stage 1, whereas the pre-computation of the reference NB-IoT subframe $B_m$ depends on the cell-ID.

**7.** The method for a joint time-frequency synchronization of UE according to claim 1, wherein the master information Bit, MIB, payload information which is delivered in the Narrowband-Physical-Broadcast-Channel, NPBCH, is demodulated in stage 1, whereas the pre-computation of the reference NB-IoT subframe $B_m$ is performed at the beginning of the synchronization procedure and depends on the re-encoding of the resource elements of the NPBCH.

**8.** The method for a joint time-frequency synchronization of UE according to claim 1, wherein the Narrowband-Wakeup-Signal, NWUS, is demodulated in stage 1, whereas the pre-computation of the reference NB-IoT subframe $B_m$ depends on the cell-ID and the time of the paging occasion to which NWUS is associated.

**Patentansprüche**

**1.** Verfahren für eine gemeinsame Zeitfrequenzsynchronisation einer Teilnehmereinrichtung, UE, in NB-IoT-Netzwerken, die bereits mit einer bedienenden Zelle verbunden sind, die eine optimale Zeitfrequenzversatzschätzung erhält, wobei das Verfahren die folgenden Schritte umfasst:

- (Schritt 1) Demodulieren eines empfangenen NB-IoT-Unterframes $R_m$, der Ressourcenelemente in der Frequenzdomäne enthält, mit Bezug auf einen vorab berechneten Referenz-NB-IoT-Unterframe $B_m$, der erwartete Ressourcenelemente in der Frequenzdomäne enthält, während die vorab berechneten Ressourcenelemente von $B_m$ aus Informationen der bedienenden Zelle abgeleitet werden, und Speichern der Ressourcenelemente des demodulierten NB-IoT-Unterframes $W_m$ in Matrix $W$, wo $m$ eine natürliche Zahl gleich oder größer als 0 ist und den m-ten verarbeiteten Unterframe repräsentiert,

- (Schritt 2) Berechnen einer Metrik $V_m(f,t)$, die durch

$$V_m(f,t) = \left| \sum_{k=0}^{N_c-1} \sum_{l=0}^{N_s-1} w_{k,l} \cdot p_l(-f) \cdot q_k(-t) \right|^2$$ definiert wird, wo $w_{k,l}$ die Elemente der Matrix $W$ des m-ten verarbeiteten Unterframes $W_m$ und der $\exp\left(2\pi j t\,(k - \frac{N_c-1}{2})\Delta f_s\right)$ Funktionen und $p_1(f)$ = 25 $exp(2\pi j \tau 1 f)$ mit Bezug auf eine Region von vordefinierten diskreten Frequenzversatzwerten $f \in F$ und diskreten Zeitversatzwerten $t \in T$ sind, Nc die Anzahl von Unterträgern in einem Unterframe ist, Ns die Anzahl von Symbolen in einem Unterframe ist und $\Delta f_s$ der Unterträgerabstand ist,

- (Schritt 3) rekursives Kombinieren der Metrik $V_m(f,t)$ in einer nicht kohärenten Weise über mehrere demodulierte NB-IoT-Unterframes $W_m$, was in einer neuen Metrik $U_m(f,t)$ resultiert,
- (Schritt 4) rekursives Berechnen eines Referenzwerts $S_m$ über mehrere demodulierte NB-IoT-Unterframes $W_m$, auf Basis einer Unterframeenergie des derzeit verarbeiteten demodulierten NB-IoT-Unterframes $W_m$,
- (Schritt 5) Vergleichen der nicht kohärent kombinierten neuen Metrik $U_m(f,t)$ mit dem Referenzwert $S_m$, während
- wenn ein normalisierter Metrikwert von $U_m(f,t)/S_m$ einen Schwellwert $K_{Threshold}(m)$ nicht überschreitet, die Schritte 1 bis 5 des Verfahrens rekursiv wiederholt werden, bis eine vordefinierte maximale Anzahl von Unterframes $M_{max}$ demoduliert wurden, wo $M_{max}$ eine natürliche Zahl größer als 0 ist, andernfalls
- (Schritt 6) wenn der normalisierte Metrikwert von $U_m(f,t)/S_m$ den Schwellwert $K_{Threshold}(m)$ überschreitet, argmax Werte mit Bezug auf die diskreten Frequenzversatzwerte $f \in F$ und die diskreten Zeitversatzwerte $t \in T$ auf Basis der nicht kohärent kombinierten Metrikwerte von $U_m(f,t)$ berechnet werden, wodurch ein optimaler Wert der Zeitfrequenzversatzschätzung erhalten wird, sofern die Anzahl von kombinierten Unterframes $W_m$ $M_{max}$ nicht überschritten hat.

2. Verfahren für eine gemeinsame Zeitfrequenzsynchronisation einer UE nach Anspruch 1, wobei alle komplexen Exponenten mit Bezug auf die diskreten Frequenzversatzwerte $f \in F$ für alle $N_s = 14$ OFDM-Symbole vorab berechnet und in einer Nachschlagetabelle gespeichert werden.

3. Verfahren für eine gemeinsame Zeitfrequenzsynchronisation einer UE nach Anspruch 1, wobei alle komplexen Exponenten mit Bezug auf die diskreten Zeitversatzwerte $t \in T$ für alle $N_c = 12$ OFDM-Symbole vorab berechnet und in einer Nachschlagetabelle gespeichert werden.

4. Verfahren für eine gemeinsame Zeitfrequenzsynchronisation einer UE nach Anspruch 1, wobei die Berechnung der Metrik $V_m(f,t)$ in einem zwei Schritte umfassenden Ansatz erfolgt, bei dem in einem ersten Schritt Zwischenwerte $c_k(f)$ zunächst auf Basis der diskreten Frequenzversatzwerte $f \in F$ berechnet werden und in einem zweiten Schritt die Metrikwerte $V_m(f,t)$ auf Basis der Zwischenwerte $c_k(f)$ des ersten Schritts und auf Basis der diskreten Werte $t \in T$ und $f \in F$ berechnet werden.

5. Verfahren für eine gemeinsame Zeitfrequenzsynchronisation einer UE nach Anspruch 1, wobei das primäre Schmalbandsynchronisationssignal, das im Unterframe Nr. 5 eines Ankerträgers übertragen wird, in Schritt 1 demoduliert wird, während der vorab berechnete Referenz-NB-IoT-Unterframe $B_m$ unabhängig von der LTE-Framenummer konstant ist.

6. Verfahren für eine gemeinsame Zeitfrequenzsynchronisation einer UE nach Anspruch 1, wobei das sekundäre Schmalbandsynchronisationssignal, das für jede gerade LTE-Framenummer im Unterframe 9 eines Ankerträgers übertragen wird, in Schritt 1 demoduliert wird, während die Vorabberechnung des Referenz-NB-IoT-Unterframes $B_m$ von der Zell-ID abhängig ist.

7. Verfahren für eine gemeinsame Zeitfrequenzsynchronisation einer UE nach Anspruch 1, wobei die Masterinformationsbit(MIB)-Nutzdateninformationen, die im physischen Schmalbandbroadcastkanal, NPBCH, übermittelt werden, in Schritt 1 demoduliert werden, während die Vorabberechnung des Referenz-NB-IoT-Unterframes $B_m$ zu Beginn der Synchronisationsprozedur durchgeführt wird und von der Neucodierung der Ressourcenelemente des NPBCH abhängig ist.

8. Verfahren für eine gemeinsame Zeitfrequenzsynchronisation einer UE nach Anspruch 1, wobei das Schmalbandwecksignal, NWUS, in Schritt 1 demoduliert wird, während die Vorabberechnung des Referenz-NB-IoT-Unterframes $B_m$ von der Zell-ID und der Zeit der Paginggelegenheit, mit der das NWUS verknüpft ist, abhängig ist.

**Revendications**

1. Procédé destiné à une synchronisation temps-fréquence commune d'un équipement utilisateur, UE, dans des réseaux NB-IoT déjà connectés à une cellule de service obtenant une estimation de décalage temps-fréquence optimale, le procédé comprenant les étapes suivantes :

   - (étape 1) la démodulation d'une sous-trame $R_m$ NB-IoT reçue contenant des éléments de ressources dans le domaine de fréquence par rapport à une sous-trame $B_m$ NB-IoT de référence pré-calculée contenant des éléments de ressources prévus dans le domaine de fréquence, tandis que les éléments de ressources pré-calculés de $B_m$ sont déduits des informations de la cellule de service, et le stockage des éléments de ressources de la sous-trame $W_m$ NB-IoT démodulée dans une matrice **W,** avec m étant un nombre naturel égal ou supérieur à 0 et présentant la $m^{ième}$ sous-trame traitée,
   - (étape 2) le calcul d'une métrique $V_m(f,\ t)$ définie par avec $w_{k,l}$ étant les éléments de matrice W de la $m^{ième}$ sous-trame traitée $W_m$ et les fonctions $q_k(t) = \exp\left(2\pi j t \left(k - \frac{N_c - 1}{2}\right)\Delta f_s\right)$ et $\boldsymbol{p_f(f) = exp(2\pi j \tau_f f)}$ par rapport à une région de valeurs de décalage de fréquences discrètes prédéfinies $f \in \boldsymbol{F}$ et de valeurs de décalage temporelles discrètes $t \in \boldsymbol{T}$, Nc est le nombre de sous-porteuses dans une sous-trame, Ns est le nombre de symboles dans une sous-trame et $\Delta\mathbf{f_s}$ est l'espacement de sous-porteuses,
   - (étape 3) la combinaison de manière récursive de la métrique $V_m(f,\ t)$ d'une manière non cohérente sur de multiples sous-trames $W_m$ NB-IoT démodulées entraînant une nouvelle métrique $U_m(f,\ t)$,
   - (étape 4) le calcul de manière récursive d'une valeur de référence $S_m$ sur de multiples sous-trames $W_m$ NB-IoT démodulées, sur la base d'une énergie de sous-trame de la sous-trame $W_m$ NB-IoT démodulée actuellement traitée,
   - (étape 5) la comparaison de la nouvelle métrique $U_m(f,\ t)$ combinée de manière non cohérente avec la valeur de référence $S_m$, tandis que
   - si une valeur de métrique normalisée de $U_m(f,\ t)/S_m$ ne dépasse pas un seuil $K_{Threshold}(m)$, les étapes 1 à 5 du procédé sont répétées de manière récursive jusqu'à ce qu'un nombre maximum prédéfini de sous-trames $M_{max}$ aient été démodulées avec $M_{max}$ étant un nombre naturel supérieur à 0, autrement
   - (étape 6) si la valeur de métrique normalisée de $U_m(f,\ t)/S_m$ dépasse le seuil $K_{Threshold}(m)$, des valeurs argmax par rapport aux valeurs de décalage de fréquences discrètes $f \in \boldsymbol{F}$ et aux valeurs de décalage temporelles discrètes $t \in \boldsymbol{T}$ sont calculées sur la base de valeurs de métriques combinées de manière non cohérente de $U_m(f,\ t)$ obtenant une valeur optimale de l'estimation de décalage temps-fréquence, à condition que le nombre de sous-trames combinées $W_m$ n'ait pas dépassé $M_{max}$.

2. Procédé destiné à une synchronisation temps-fréquence commune d'UE selon la revendication 1, dans lequel toutes les exponentielles complexes par rapport aux valeurs de décalage de fréquences discrètes $f \in \boldsymbol{F}$ pour l'ensemble de $N_s$ = 14 symboles OFDM sont pré-calculées et stockées dans une table de recherche.

3. Procédé destiné à une synchronisation temps-fréquence commune d'UE selon la revendication 1, dans lequel toutes les exponentielles complexes par rapport aux valeurs de décalage temporelles discrètes $t \in \boldsymbol{T}$ pour l'ensemble de $N_c$ = 12 symboles OFDM sont pré-calculées et stockées dans une table de recherche.

4. Procédé destiné à une synchronisation temps-fréquence commune d'UE selon la revendication 1, dans lequel le calcul de la métrique $V_m(f,\ t)$ est effectué dans une approche en deux étapes, au niveau de laquelle, dans une première étape, des valeurs intermédiaires $c_k(f)$ sont d'abord calculées sur la base des valeurs de décalage de fréquences discrètes $f \in \boldsymbol{F}$ et, dans une seconde étape, les valeurs de métriques $V_m(f,\ t)$ sont calculées sur la base des valeurs intermédiaires $c_k(f)$ de la première étape et sur la base des valeurs discrètes $t \in \boldsymbol{T}$ et $f \in \boldsymbol{F}$.

5. Procédé destiné à une synchronisation temps-fréquence commune d'UE selon la revendication 1, dans lequel le signal de synchronisation primaire à bande étroite transmis sur une sous-trame #5 d'une porteuse d'ancrage est démodulé dans l'étape 1, tandis que la sous-trame $B_m$ NB-IoT de référence pré-calculée est constante quel que soit le nombre de trames LTE.

6. Procédé destiné à une synchronisation temps-fréquence commune d'UE selon la revendication 1, dans lequel le signal de synchronisation secondaire à bande étroite transmis sur une sous-trame 9 d'une porteuse d'ancrage pour chaque nombre de trame LTE pair est démodulé dans l'étape 1, tandis que le pré-calcul de la sous-trame $B_m$ NB-IoT de référence dépend de l'identifiant de cellule.

7. Procédé destiné à une synchronisation temps-fréquence commune d'UE selon la revendication 1, dans lequel les informations de charges utiles de bits d'informations maîtres, MIB, qui sont délivrées dans le canal de diffusion physique à bande étroite, NPBCH, sont démodulées dans l'étape 1, tandis que le pré-calcul de la sous-trame $B_m$ NB-IoT de référence est effectué au début de la procédure de synchronisation et dépend du recodage des éléments de ressources du NPBCH.

8. Procédé destiné à une synchronisation temps-fréquence commune d'UE selon la revendication 1, dans lequel le signal d'activation à bande étroite, NWUS, est démodulé dans l'étape 1, tandis que le pré-calcul de la sous-trame $B_m$ NB-IoT de référence dépend de l'identifiant de cellule et du moment de l'occasion de radiomessagerie auquel NWUS est associé.

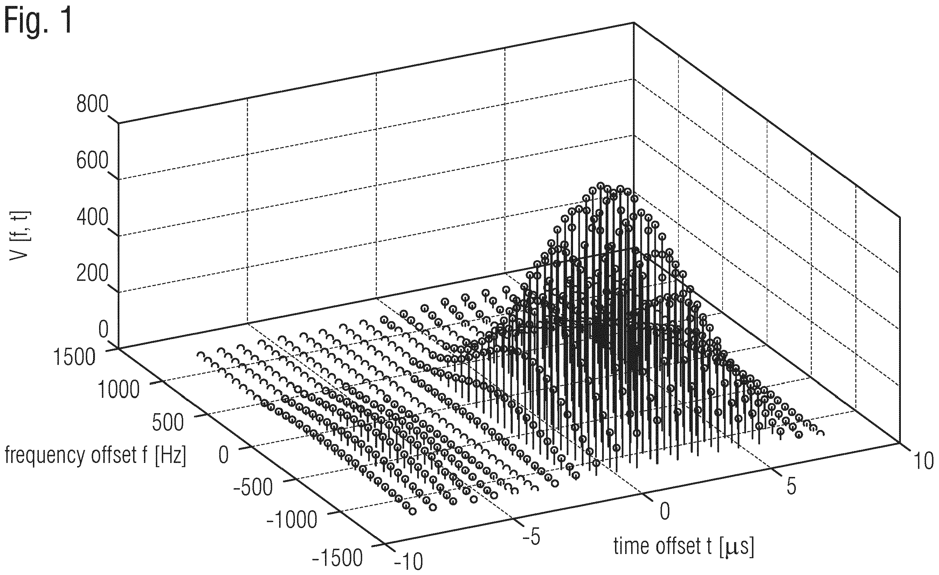

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP. Physical channels and modulation. TS 36.211 V15.6.0,* July 2019
- **QUALCOMM INCORPORATED.** *R1-161981,* March 2016
- **MEDIATEK INC.** *On design aspects for NB-IoT Wake Up Signal,* 18 November 2017, vol. RAN WG1 (Reno